Europäisches Patentamt

(19) European Patent Office

Office européen des brevets

(11) Publication number: **0 096 064**
**B1**

(12) **EUROPEAN PATENT SPECIFICATION**

(45) Date of publication of patent specification: **19.10.88**

(51) Int. Cl.⁴: **G 02 B 6/28, G 02 B 5/20**

(21) Application number: **83900319.1**

(22) Date of filing: **15.12.82**

(86) International application number:
**PCT/US82/01744**

(87) International publication number:
**WO 83/02168 23.06.83 Gazette 83/15**

(54) **OPTICAL RESONANT CAVITY FILTERS.**

(30) Priority: **16.12.81 US 331052**

(43) Date of publication of application:
**21.12.83 Bulletin 83/51**

(45) Publication of the grant of the patent:
**19.10.88 Bulletin 88/42**

(84) Designated Contracting States:
**AT BE CH DE FR GB LI NL SE**

(56) References cited:
**EP-A-0 037 793**
**CA-A-1 108 902**
**DE-A-1 939 447**
**DE-A-2 927 025**
**FR-A-2 501 383**
**JP-A-55 029 847**
**US-A-3 408 131**
**US-A-3 704 996**
**US-A-3 803 511**
**US-A-4 088 389**
**US-A-4 255 017**
**US-A-4 315 666**
**US-A-4 342 499**

(73) Proprietor: **POLAROID CORPORATION**
**549 Technology Square**
**Cambridge, Massachusetts 02139 (US)**

(72) Inventor: **HICKS, John Wilbur, Jr.**
**P.O. Box 345**
**Southbridge, MA 01550 (US)**

(74) Representative: **Koch, Günther, Dipl.-Ing. et al**
**Patentanwälte Dipl.-Ing. C. Wallach Dipl.-Ing. G.**
**Koch, Dr. T. Haibach Dipl.-Ing. R. Feldkamp**
**Postfach 920**
**D-8000 München 33 (DE)**

(56) References cited:
**Optics Letters, Issued June 1982, L.F. Stokes**
**ET AL, All-Single-mode Fiber Resonator**
**(pp. 288-290)**

Courier Press, Leamington Spa, England.

# 0 096 064

**Description**

This invention relates to an optical communications system comprising a device for transferring from an optical fiber conducting light energy of a plurality of wavelengths distributed over a broad spectral region to another optical fiber a selected number of said wavelengths out of a narrower wavelength band.

In this technical field numerous attempts have been made to provide tuned, dispersive lateral coupling between two fiber cores has been described; however, the construction of a filter by such means having a width less than .001 of the central wavelength has proven to be difficult. Such difficulty arises from limitations of the drawing process for the fiber device, which produces a variation in fiber diameter. The art of fiber optics drawing is improving on a day basis, and the foregoing limitation is disappearing with the refinement of the fiber drawing art; nevertheless, the difficulty still exists and there is a present need for less than 0.1 nm range filter in the one to two μm regions.

The narrow band filtering as expressed in the foregoing paragraph is useful, since in a large communications system the cost of trunk lines reduces if the number of signal channels per fiber increases. Still further, the number of possible ports in a switching station goes up as the number of channels per fiber increases. To emphasize the latter of the foregoing uses for narrow band filter, switching must be categorized broadly into two techniques. A common manner of switching requires the crossing of m lines over n in a rectangular matrix and providing switches at each cross over point. Of course, such a system relies primarily on a very large number of two-position switches.

A second manner utilizes the broadcast by m stations. Each broadcast station uses one of many possible "channels". Switching is accomplished by tuning the proper receiving port to the same channel as the selected sending port.

In terms of broadcast switching, a multichannel transmission line offers an improvement over free space broadcasting since the energy of any channel need not be as great. Channel energy is routed down a common line and remains on the line until it passes a port which removes the energy from the line. Fiber optics offers an improvement over existing channel broadcast switching stations because of the very large number of channels that can be carried by a single fiber line.

If a single mode fiber carries 10 channels spread over 1/10th of the optical spectrum just beyond the single mode edge, it will be loaded in terms of bandwidth only when the modulation rate on each channel is around $5\times10^{10}$ pulses per second. (Assuming the wavelength region to be around 1 μm). But, such high modulation rates are hard to achieve with present technology. Further, the pulses are diffused relatively quickly as they travel down a length of fiber because of group velocity dispersion. Still further, no one seems to have much need for a single information signal with a higher than video rate. Therefore, to fully load such a 100 wavelength channel fiber, it would be necessary to multiplex in the time domain approximately 1000 video signals. Means for time domain multiplexing is relatively very expensive and with the present state of the electronics art, it is not possible to do time division multiplexing in packets with video rate signals and trunk rates of $5\times10^{10}$ pulses per second. It is barely possible, if at all, at $5\times10^9$ pulses per second.

For the above reasons, it would be extremely advantageous to be able to use 10,000 to 100,000 wavelength channels on a single fiber and not have to use any time domain multiplexing at all. To accomplish this, one needs to filter a line width of 1/100,000 to 1/1,000,000 of the base wavelength, which in the one μm wavelength region comes to 0.01 nm down to 0.001 nm. There is nothing crucial about these exact numbers. There is even some limited advantage in a filter with 0.1 nm line width as opposed to 1 nm width.

There are various applications for wavelength filters but in the one just used for illustration, one needs to do the following:

1. Separate off a narrow spectral line onto a separate path.

2. Disturb the remainder of the wavelength channels as little as possible. For example, if one were to remove one-half the energy in the remainder of the channels, the number of operable receiving ports decreases significantly. It is not necessary to put all n receivers on a single line. The same set of signal bearing channels can be sent down several lines in parallel so that all the receivers do not have to be on the same line. However, there is an advantage in perturbing the unfiltered channels as little as possible and using the fewest number of parallel lines in a switching station.

Another area of use in a fiber optics distribution system. In such a system, a local switching station addresses a particular receiver on a common distribution line by placing the signal on the wavelength channel to which the receiver is tuned. That is, the receiver has a fixed tuned line tap which removes one wavelength channel as it passes on the common line. Again, it is desirable to leave the untapped channels as unperturbed as possible. The advantage of increasing the number of channels from 100 to 1,000 or 10,000 on a local distribution line is not overwhelming, but there is a peripheral advantage in the use of the present invention beside line width. That advantage is the increased temperature stability of the present invention for a given line width. A second peripheral advantage is the ease of making the line tap.

In the existing technology, there are other approaches to narrow line filtering. For instance, the usual choice of optical line filtering means is available, such as prisms, diffraction gratings, Fabry-Perrot interferometers, and the like. They all suffer from their geometry. In none of the devices is it easy to get the filtered light onto one fiber and to get the remainder of the light onto another fiber.

2

The Fabry-Perrot is the only one named which achieves line widths as low as 0.1 nm in a small volume. The typical diffraction grating monochromator capable of resolving 0.1 nm is 3 m long with a volume of about 14 m³. Clearly, it is not a convenient device for the present purposes.

An optical communication system having lateral directional coupling of optical fibres (dispersive as well as non-dispersive) is disclosed in EP—A—37 793. Further from DE—A—19 39447 a device for transferring light energy is known in connection with filtering wavelengths by using resonant cavities in combination with directional coupling (one cavity as well as a plurality of different cavities arranged in series) in strip waveguides.

It is the technical problem of the present invention to improve an optical communication system of the type as specified in the generic part of claim 1 so that frequency selective coupling between optical waveguides by way of a resonant cavity is provided in such a way that unwanted side orders of resonant wavelengths are suppressed.

In accordance with the present invention the technical problem is solved by the features of the characterizing portion of claim 1. The suppression of such unwanted side orders of resonant frequencies therefore is accomplished by dispersive coupling.

Other objects, features and advantages of the present invention will become more clearly apparent by reference to the following more detailed description of preferred and alternative, but nonetheless illustrative, embodiments, with reference to the accompanying drawings wherein:

Fig. 1 represents a Fabry-Perrot type structure, wherein input and output fibers are joined by an intermediate lateral-coupled filter fiber in an elongated configuration to explain the principle of fibre optic cavities.

Fig. 2 represents a looped fiber with input and output coupling enabled by means of lateral coupling techniques shown again for illustrating the principle of fibre optic cavities and like Fig. 1 does not relate to an embodiment of the invention.

Fig. 3 shows one embodiment of the invention in form of a two-stage filter, in a hybrid configuration with a dispersive lateral coupler in combination with a cavity resonator filter, which when laid out straight appears as shown in Fig. 3A.

Figs. 3B, 3C and 3D enable explanation of the operation of the hybrid two-stage filter of Fig. 3.

Fig. 4 represents in a further embodiment of the invention the linear version of the dispersive lateral coupler filter of Fig. 3.

Resonant cavities are well known in longer wavelength regions of the electromagnetic spectrum, but such devices are an exception within the optical region of that spectrum. Even where resonant cavities are used in the optical part of the spectrum, they suffer from high loss rates per cycle and are not small enough to operate in the 0.1 nm to .001 nm line width range. Such devices are universally in planar optical form rather than in fiber form and light loss per revolution is relatively high in such planar devices. Still further, it has proven to be difficult to couple efficiently from a fiber to a planar device. The physical structure of existing resonant devices is so large (30 cm in circumference and greater) that at 1 µm line spacing is 1/300 nm or less, with a line width of 1/30000 nm.

If one uses a fiber device in the form of a linear resonant cavity having highly reflective metal coatings at the ends and single mode operation with butt-coupling to the transmission fibers, difficulties result.

The fundamental difficulty is shared with the Fabry-Perrot. That is, the nature of a highly reflective metal surface is to absorb most of the light which is not reflected. This is inherent in the reflection process for metallic mirrors, so this device has a very low through-put efficiency at a resonant wavelength.

In the case of Fabry-Perrot, this can be avoided by using highly reflective multi-layer dielectric coatings. Such multi-layer mirrors are of necessity not thin compared to the wavelength of light to be reflected.

Therefore, because of this thickness, they will not be highly efficient on the end faces of a linear fiber cavity resonator, and constitute an undesirable gap in the optical path.

A second difficulty is that the unfiltered remaining light beam is headed back up the same fiber which brought the light to the cavity. This is anything but convenient.

A third difficulty is common to all simple resonant cavity devices of this sort. Namely, there are many resonant lines, more or less equally spaced.

The condition for resonance is that all of the phase changes resulting from factors which influence the phase of the light during one complete round trip must add up to an integral number of wavelengths. Obviously, if for a given resonant wavelength the optical path is 1000 wavelengths, then there will be another resonant wavelength such that the optical path is 999 wavelengths and another at 1001 etc. Unless the medium is very sharply dispersive, these will occur at a change in wavelength of about 1/1000 of the original wavelength. Instead of filtering off one wavelength any simple resonant cavity filters off a series of wavelengths.

The ratio of line width (of each resonant wavelength) to spacing between lines is approximately proportional to the fraction of energy lost in the course of one round trip. This loss includes reflection losses, scattering, transmission losses, and losses through the input and output ports (assuming the input source is momentarily turned off).

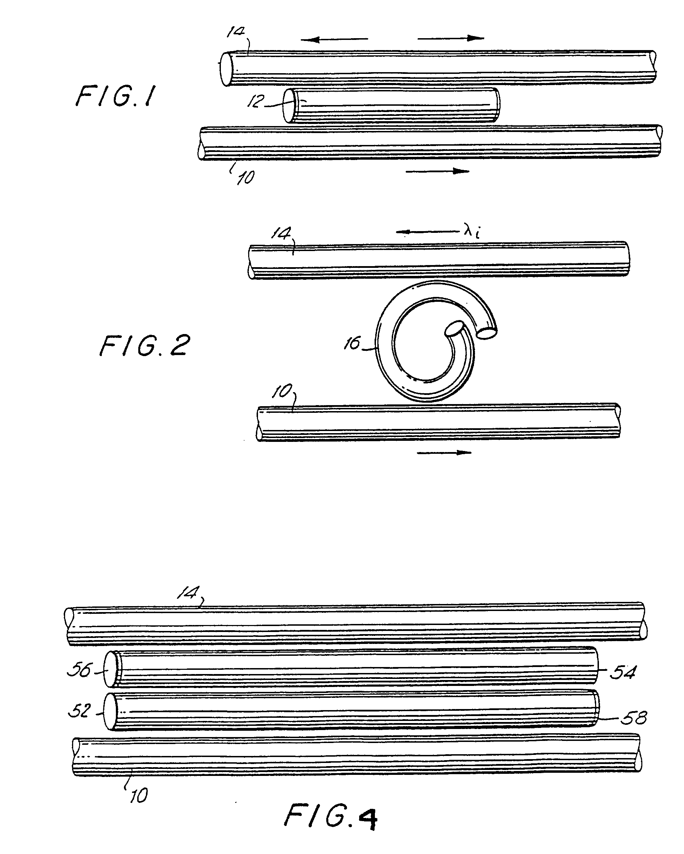

In order to illustrate the principles of fiber optic cavities reference is made to Fig. 1 and 2. In the device of Fig. 1 a laterally coupled linear resonant mirror-ended fiber optic cavity 12 is provided. Referring to Fig. 1, it will be noted that the filtered light in the output fiber 14 is, unfortunately going to left and right and will go to the left in the input fiber 10 also. The energy is equal in each alternative path. This results from the first part of what may be called the "equiportation of energy rule". That is, the energy output from each possible port will be equal if the ports are equally coupled. For this purpose, each possible loss mechanism can be regarded as a fictitious port. If the ports are not equally coupled, then the light output from each port will be proportional to the energy coupling (or to the square of the amplitude coupling). The second part of the "equiportation" rule is that 100% of the light energy from the input line will be extracted when the input port energy coupling is equal to the sum of the energy coupling into all the exit ports, including losses. This is at resonance, of course.

Distribution can be improved by putting a mirror on the left hand end of output fiber 14 in Fig. 1. The left-hand end of upper fiber 14 then reflects the filtered wavelength. Because of interference effects, the amplitudes of the wave going to the right and the one reflected from the left will be added. If they are exactly in phase for a $\lambda_R$ (resonance wavelength) of the cavity, the amplitude will be doubled and the energy directed to the right will be quadrupled.

A first reaction is that 4/5 of the light energy will then go into the desired path. This is not so. The port giving rise to the left-hand flow in the input fiber is obviously coupled to the cavity equally as strong as the input port. The only way to get 100% coupling from the input port is to remove the upper fiber entirely. To add another doubly coupled port at the top is to mismatch the cavity ports badly. For small coupling per port, the following is approximately true:

$$\text{Energy coupled in} = \frac{4(X_1+X_2+X_3---)}{(1+X_1+X_2+X_3---)^2}$$

Where $X_i$ is the ratio of the energy (not amplitude), coupling constant of the ith port to the energy coupling constant of the input port.

And further:

$$\text{Energy coupled into desired ports} = \frac{4(X_{d_1}+X_{d_2})}{(1+X_1+X_2---)^2}$$

In one case, the first and unmanageable port is the left direction lower port and it is of the same coupling strength as the input port. If we assume no energy losses due to reflection, etc., then the only other output port is the upper combination port. Let the energy coupling efficiency of the combined (interferred) port be $X_d$, then the useful output will be:

$$\frac{4X_d}{(2+X_d)^2}$$

which has a maximum at $X_d=2$ but it is fairly flat from $X_d=1$ to 3.

Ideally, then the energy coupled into the upper fiber in one direction should be 1/2 as great as the energy coupled in from the lower fiber. Interference raises this to twice the energy coupled from the lower fiber and in this case 50% of the light exits through the upper fiber, 25% to the left through the lower fiber and 25% passes by without being tapped.

To put the case more generally, the third party of the "equiportation of energy rule" says that the energy into a useful output port is maximized if the energy coupling into that port is equal to the sum of the coupling coefficient into all the other ports counting the losses as fictitious ports and counting the input port as a port also.

That is, energy into a desired output port is maximized if:

$$X_d=X_{in}+\Sigma X_{losses}+\Sigma X$$

Assuming that all coupling coefficients are small.

The energy output through the desired port near a resonance wavelength is:

$$E\text{ out}=E\text{ in}\frac{4\,X_d}{[1+\Sigma X_{loss}+\Sigma X_{other\ ports}+X_d]}\left[\frac{2\pi\,\gamma\lambda/\Delta\lambda}{K^2\text{ input}}\right]^2$$

Where $\gamma\lambda$ is the displacement in wavelength from a resonance line and $\Delta\lambda$ is the distance between two resonance lines. From this, it is obvious that the point at which the energy is half the peak energy is:

$$\frac{\gamma\lambda}{\Delta\lambda} = \frac{(1+\Sigma X)\ K\ \text{input}}{2\pi}$$

In this case:

input left lower output end loss useful output

$1+\Sigma X=1+1+2+4=8$

and $K=.01$.

So at the half energy point:

$$\frac{\gamma\lambda}{\Delta\lambda} = \frac{8\ (.01)}{2\pi}\cong.013$$

the 20% of peak energy point is:

$$\frac{\gamma\lambda}{\Delta\lambda} = 2\ \frac{(1+\Sigma X)}{2\pi}K_{in}$$

$\cong.026$ in our example.

And the 10% of peak point is:

$$\frac{\gamma\lambda}{\Delta\lambda} = 3\ \frac{(1+\Sigma X)}{2\pi}K_{in}$$

$\cong.039$ in our example.

If signal channels are placed at a spacing of $.039\Delta\lambda$ about 10% "cross-talk" will obtain between channels using this filter, which may or may not be acceptable, and about 25 channels can be squeezed into one order.

The device of Fig. 2 utilizes a closed loop fiber 16, between the input and output fiber preferably using lateral coupling for loop closure and using lateral coupling for input and output, and using the whole device for a resonant cavity wavelength filter.

This device has the advantage of having very low energy loss per revolution. A carefully constructed lateral couple can have a pass-through efficiency well in excess of 99% over a spectral range of 1% of the base wavelength.

It can also be made in the size range of one-half cm to 5 cm diameter which is a region of interest. The lower limit requires considerable care.

In the following reference is made to two embodiments of the present invention in accordance whereof a hybrid two stage filter has been devised that better achieves the objectives. It includes a dispersive lateral coupler in combination with a cavity resonator filter.

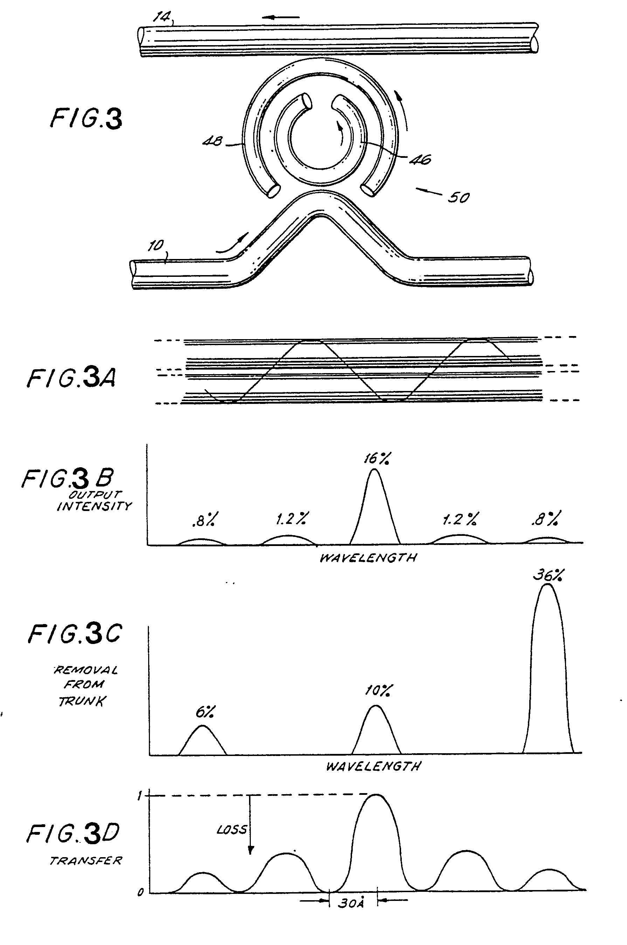

One version is as shown schematically in Fig. 3. Light is Laterally coupled in from input fiber 10 to inner lateral element 46 of the resonator section 50 and is laterally coupled out from outer lateral element 48 to output fiber 14. The outer and inner elements 46 and 48 form a tuned lateral filter coupler, which when laid out straight looks as shown in Fig. 3A. The resonant wavelength of the filter is controlled by the length of filter elements 46 and 48 with the light energy at those wavelengths being transferred between the elements as illustrated in Fig. 3A. The breaks in the filter elements are so located as to be at the point at which all the energy for the wavelength of interest is in the other arm, such that that wavelength sees a continuous path. For a wavelength slightly displaced from the tuned wavelength, some of the energy is lost at the open ends at the break. Thus, the resonant cavity has a loss per revolution that is fairly strongly wavelength dependent. Putting a hypothetical wavelength dependent loss into the energy expression for energy coupled off the trunk, we see that if other losses are .01 and if the energy coupling factor from the trunks into the cavity is .002, the energy transferred to the output will be:

$$\frac{4\ (5)}{(1+5+5)^2} = \frac{20}{121}\cong16\%$$

if the coupling to the output line is .01.

At the next resonant line, if the loss factor, which is wavelength dependent, is only .06, the light coupled off the trunk will be only:

# 0 096 064

$$\frac{4\ (5+5+30)}{(1+5+5+30)^2} = \frac{4}{40} \cong 10\%$$

Suppose the loss factor at the next resonant line has risen to .12, the energy at that wavelength removed from the trunks is only 5.7%, and so on.

What results is an output that looks as shown in Fig. 3B. The Fig. 3B operation might be further improved by another independent filter. The light removed from the trunk appears as shown in Fig. 3C which illustrates only the left hand side of the complete spectrum as shown in Fig. 3B. This is by far the best result obtained. Only 10% is removed from the next adjacent line and 6% from the next and even less from the next. In this way, a large number of single line removal filters can be placed on the trunk. Each one robs its immediate neighbors of a little energy, but the end result is that it is limited by the set-off resonance coupling which is 0.2%. This would allow perhaps 500 such filters in series on a trunk line.

A certain loss factor was hypothesized. In actual fact, the curve for the tuned lateral filter can be used, as shown in Fig. 3D. Next, a wavelength scale is needed. A rule of thumb value was given for relative dispersion of two cores as:

$$\Delta n \cos \theta = 1/3\ (n_1 - n_2),$$

here $n_i$=index of refraction. $(n_1 - n_2)$ value of .01 may be achieved. Therefore, in a filter coupler 2 cm long with a wavelength of 1 μm, the first null on each side is displaced by about 3 nm. The loss 0.5 nm from peak would be about .06. So the envelope in this case would be much broader than the one hypothesized, since the line spacings of the cavity resonator (2 cm long) is 1/20 nm. The curve of removal energy from the trunk would drop to 10% only at the 10th line from center. That situation is not unusable, but it illustrates the need for a relative dispersion higher than .03. It would be advantageous to have a dispersion of at least 0.1.

It is necessary to drop the energy extraction at the central resonant line a little over and/or to increase the energy available on the trunk line so that even after poaching by neighboring filters and even after a rather low throughput efficiency, the energy level is adequate for detection. Even with the parameters given, the system is workable.

The linear version of the filter of Fig. 3 is presented in Fig. 4. In this embodiment, filter elements 52 and 54 define a tuned dispersive filter couple. Element 52 has mirror 56 at its left and while element 54 has mirror 58 at its right end to define the appropriate length. The coupling length between the elements is chosen to given preference to the specific wavelength of interest, so that the two stage operation is developed. To further sharpen the response of the filter, the non-mirrored ends can be made increasingly lossy to help attenuation the non-desired wavelengths.

The mirrors need not be located as shown. Depending on the length of the dispersive couple, the mirrors can be located on the same fiber or on the right end of upper fiber 54 and the left end of lower fiber 52. The requisite is that they define an integral number of wavelengths between them for the wavelength of interest.

In both of the examples given herein, all of the fiber elements were preferably operating in the single mode wavelength region, without discussion of the existence of two possible polarizations. The assumption was made that the input fiber element had only one polarization mode excited and that the coupling between elements was such as to avoid stimulation of the second polarization mode. This is not, however, a necessary restriction. In every case if two polarizations are stimulated, a double set of resonant lines will occur. The filter still works, but the existence of the double set of lines must be accounted for when using the filter.

Even the restriction to single mode is not necessary although it is the preferred embodiment. The existence of multiple modes in any of the resonator elements multiplies and complicates the resonant line structure, but does not prevent the devices from working.

With respect to single mode resonators and a multi-mode input fiber element, the present invention differs from other wavelength selective filters in that it provides a unique filter line structure independent of the mode structure of the input fiber. In the previous filters, wavelength is determined by the relationship between the propagation constant of an input fiber mode and that of the output fiber.

In the present invention, the filter line or lines is determined only by the resonator. Only the degree of input coupling is affected by phase matched lateral transfer.

Therefore, in using a multi-mode fiber as an input element, one needs only to provide sufficiently close phase matching at the desired wavelength between the resonator and at least one mode of the input fiber. If the energy in the multi-mode fiber is divided among many possible modes, then it is impossible to remove a large percentage of the total energy since it will not be possible to phase match with all the modes. In fact, only one can be matched exactly. In some applications, such a partial tapping off of one wavelength from a multi-mode fiber will be a useful accomplishment since there is at present no other way to do this with a lateral tap.

The phase matching of one mode of the multi-mode fiber with the resonator can be accomplished by design or by tuning. The entire mode structure of the multi-mode fiber can be shifted by longitudinal stress, temperature change, lateral stress, or bending.

6

# 0 096 064

### Claims

1. An optical communications system comprising a device for transferring from an optical fiber (10) conducting light energy of a plurality of wavelengths distributed over a broad spectral region to another optical fiber (14) a selected number of said wavelengths out of a narrower wavelength band, characterized in that there is provided between said optical fibers (10, 14) a resonant fiber cavity (50) of a length configured such that the wavelengths of resonance comprise the selected wavelengths, the fiber cavity comprising first and second optical fiber portions (46, 48; 52, 54) dispersively coupled to each other so that the selected wavelengths are transmitted between them, and the first and second fiber portions (46, 48; 52, 54) being respectively laterally coupled to the one and the other of said optical fiber (10, 14) to reduce the number of wavelengths trasnferred from the one optical fiber (10) to said other optical fiber (14) as compared with the number of wavelengths of resonance of the fiber cavity (50).

2. The system of claim 1, characterized in that said first and second fiber portions, (46, 48) are located so that the break between both ends of each fiber portion is at the point at which all the energy for the wavelength of interest is in the other fiber portion such that the light of that wavelength travels along a continuous path.

3. The system of claim 1, characterized in that the fiber portions (52, 54) form a linear version of a filter defining a tuned dispersive filter couple with said optical fibers.

4. The system of claim 3, characterized in that said fiber portions (52, 54) are provided with a mirror (56, 58) at opposite ends and that the non-mirrored ends are made increasingly lossy to help attenuation non desired wavelength.

### Patentansprüche

1. Optisches Kommunikationssystem mit einer Vorrichtung, die aus einer optischen Faser (10), welche Lichtenergie mit mehreren Wellenlängen führt, die über ein breites Spektralband verteilt sind, eine gewählte Zahl der Wellenlängen aus einem schmaleren Wellenlängenband auskoppelt und in eine weitere optische Faser (14) einkoppelt, dadurch gekennzeichnet, daß zwischen den optischen Fasern (10, 14) ein Resonanzfaserhohlraum (50) einer solchen Länge vorgesehen ist, daß die Resonanzwellenlängen die gewählten Wellenlängen umfassen, und daß der Faserhohlraum erste und zweite optische Faserabschnitte (46, 48; 52, 54) umfaßt, die dispersive derart aneinandergekoppelt sind, daß die gewählten Wellenlängen dazwischen übertragen werden, und daß die ersten und zweiten Faserabschnitte (46, 48; 52, 54) jeweils seitlich mit der einen bzw. anderen optischen Faser (10, 14) gekoppelt sind, um die Zahl der Wellenlängen im Vergleich mit der Zahl von Resonanzwellenlängen des Faserhohlraums (50) zu verringern, die von der einen optischen Faser (10) auf die andere optische Faser (14) übertragen werden.

2. System nach Anspruch 1, dadurch gekennzeichnet, daß die ersten und zweiten Faserabschnitte (46, 48) so angeordnet sind, daß die Lücke zwischen den Enden jedes Faserabschnitts an einer Stelle liegt, an der die gesamte Energie der interessierenden Wellenlänge im anderen Faserabschnitt befindlich ist, derart, daß das Licht jener Wellenlänge einen kontinuierlichen Pfad durchläuft.

3. System nach Anspruch 1, dadurch gekennzeichnet, daß die Faserabschnitte (52, 54) eine lineare Version des Filters umfassen, das eine abgestimmte dispersive Filterkopplung mit den optischen Fasern definiert.

4. System nach Anspruch 3, dadurch gekennzeichnet, daß die Faserabschnitte (52, 54) an gegenüberliegenden Enden mit einem Spiegel (56, 58) versehen sind und daß die nicht mit einem Spiegel versehenen Enden zunehmend verlustbehaftet sind, um die nicht gewünschte Wellenlänge abzuschwächen.

### Revendications

1. Système de communications optiques comprenant un dispositif pour transfèrer d'une fibre optique (10), conduisant une énergie lumineuse présentant une multiplicité de longueurs d'onde réparties sur une large région spectrale, à une autre fibre optique (14) un nombre choisi desdites longueurs d'ondes hors d'une bande plus étroite de longueurs d'ondes, caractérisé en ce qu'entre les fibres optiqes (10, 14) est disposée une cavité résonante (50) à fibre d'une longuer telle que les longueurs d'ondes de résonance comprennent les longueurs d'ondes choisies, la cavité à fibre comprenant des première et seconde portions de fibres (46, 48; 52, 54) couplées l'une à l'autre de façon dispersive de sortie que les longueurs d'ondes choisies sont transmises entre elles, et les première et seconde portions de fibre (46, 48; 52, 54) étant respectivement couplées latéralement à l'une et à l'autre fibres optiques (10, 14) pour réduire le nombre de longueurs d'ondes transférées d'une fibre optique (10) à l'autre fibre optique (14) en comparaison du nombre de longueurs d'ondes de résonance de la cavité (50) à fibre.

2. Système selon la revendication 1, caractérisé en ce que les première et seconde portions de fibre (46, 48) sont disposées de manière que la solution de continuité entre les extrémités de chaque portion de fibre se trouve au point auquel toute l'énergie relative à la longueur d'onde présentant de l'intérêt se trouve dans l'autre portion de fibre de sorte que la lumière correspondant à cette longueur d'onde se déplace le long d'un trajet continu.

3. Système selon la revendication 1, caractérisé en ce que les portions de fibre (52, 54) forment, avec

7

les fibres optiques, une version linéaire d'un filtre constituant un couple de filters dispersif accordés.

4. Système selon la revendication 3, caractérisé en ce que les portions de fibre (52, 54) sont pourvues d'un miroir (56, 58) à leurs extrémités opposées et que les extrémités non pourvues de miroir sont réalisées avec un facteur de perte accru pour contribuer à atténuer la longuer d'onde non désirée.

FIG.1

FIG.2

FIG.4

FIG.3

FIG.3A

FIG.3B
OUTPUT
INTENSITY

FIG.3C

REMOVAL
FROM
TRUNK

FIG.3D

TRANSFER